# EUROPEAN PATENT SPECIFICATION

(11) **EP 2 319 747 B1**
(45) Date of publication and mention of the grant of the patent: **28.01.2015**
(21) Application number: 10190048.8
(22) Date of filing: 04.11.2010
(51) Int. Cl.: B62H 1/04, B62H 1/00

(54) **Vehicle stand device**
Fahrzeugstandvorrichtung
Dispositif de support pour véhicule

(30) Priority: 05.11.2009 TW 098137565
(43) Date of publication of application: 11.05.2011
(73) Proprietor: China Motor Corporation, Sec.2, Da'an Dist Taipei (CN)
(72) Inventor: Tsai, Tsung-Yi, Taoyuan (TW); Tseng, Chao-Chin, Taoyuan (TW); Wang, Kuan-Tso, Taoyuan (TW); Chan, Chin-Shan, Taoyuan (TW)
(74) Representative: Stöckeler, Ferdinand

(56) References cited:
- EP-A2- 0 359 244
- WO-A1-2008/087659
- FR-A3- 2 763 905
- US-A- 4 671 374
- US-A- 5 886 349

## Description

The present invention relates to a vehicle part, more particularly to a vehicle stand device.

Conventional vehicle stand devices of vehicles nowadays, such as motorcycles, are mostly operated by stepping on a foot stand and pulling the vehicle toward a tail direction to make the vehicle stand on the ground through the foot stand, and pushing the vehicle toward a head direction to lift the foot stand. Thus, the conventional vehicle stand device is not an automatic vehicle stand, and is strenuous to operate.

Document EP0359244 discloses an automatic stand device as in the preamble of claim 1.

The invention seeks to improve prior art devices. It is therefore an object of the present invention in accordance with claim 1 to provide an automatic vehicle stand device that is easy to operate.

Accordingly, the vehicle stand device of the present invention is for attachment to a vehicle frame and includes a housing, a driving unit, a transmission unit, a link, and a foot stand.

The housing is for mounting on the vehicle frame, and confines a receiving space.

The driving unit is mounted on the housing. The driving unit includes a motor, a speed reduction mechanism driven rotatably by the motor and having an output shaft, and a transmission member driven rotatably by the output shaft of the speed reduction mechanism and disposed in the receiving space.

The transmission unit includes a rotary shaft mounted rotatably on the housing, a driven member mounted on the rotary shaft and driven rotatably by the transmission member, and a driving member mounted on the rotary shaft for rotation therewith.

The link has an actuated portion disposed in the receiving space, a connecting portion extending from the actuated portion and outwardly of the receiving space, a guide slot formed in the actuated portion, and a plurality of teeth formed on the actuated portion and meshing with the driving member. The output shaft of the speed reduction mechanism extends through the guide slot, and is slidable therealong.

The foot stand is attached to the link.

The motor may be activated to drive rotation of the transmission unit to actuate the link and the foot stand to rotate for parking the vehicle or lifting the foot stand automatically.

Other features and advantages of the present invention will become apparent in the following detailed description of the preferred embodiment with reference to the accompanying drawings, of which:
Figure 1 is a schematic view illustrating a preferred embodiment of the vehicle stand device of the present invention;
Figure 2 is a view similar to Figure 1, illustrating that a first housing body is omitted and a foot stand is at a standing position;
Figure 3 is a view similar to Figure 2, illustrating that the foot stand is at a lifted position;
Figure 4 is a perspective view of the preferred embodiment in the same condition as that illustrated in Figure 2; and
Figure 5 is a fragmentary exploded perspective view of the preferred embodiment, illustrating a transmission unit and a link.

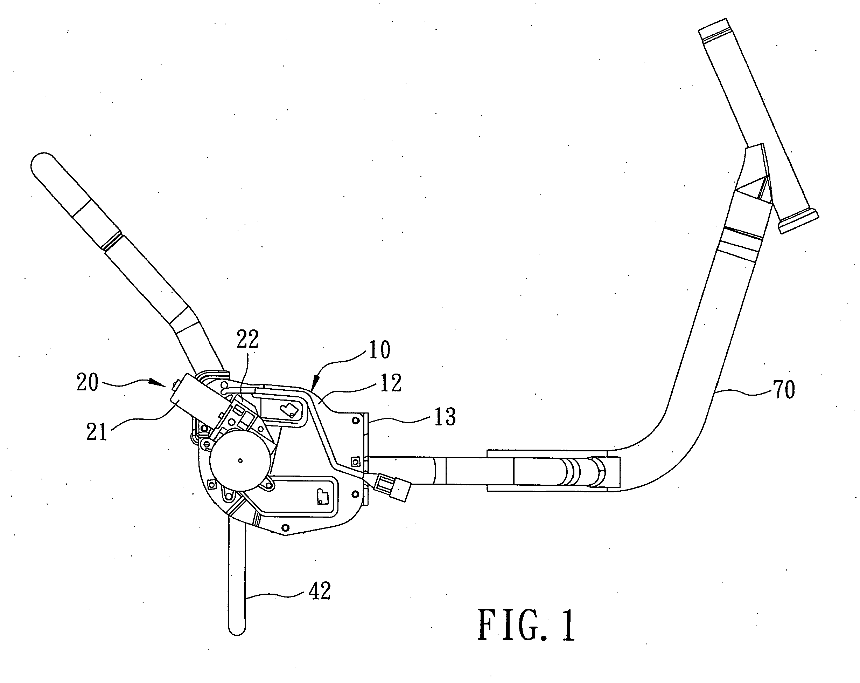

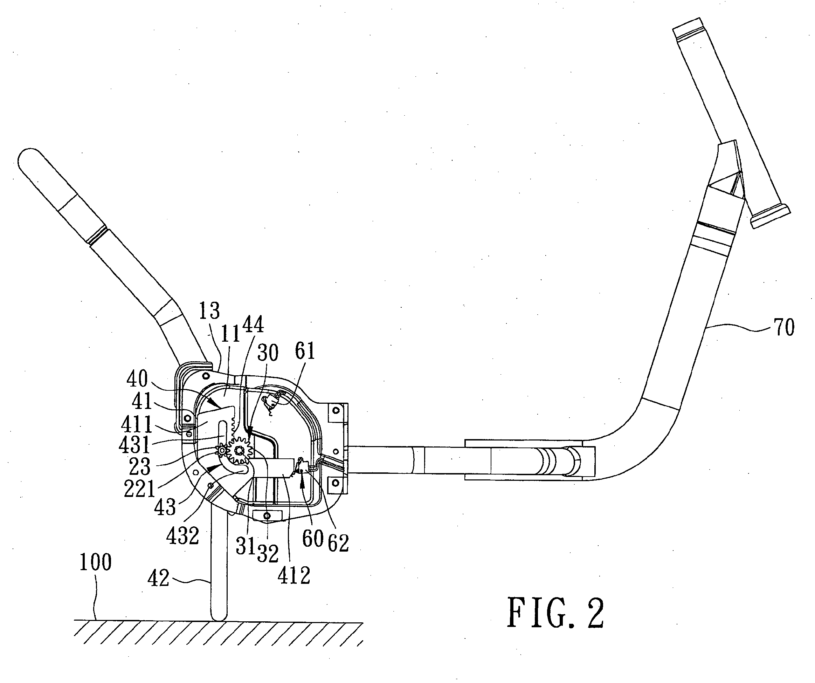

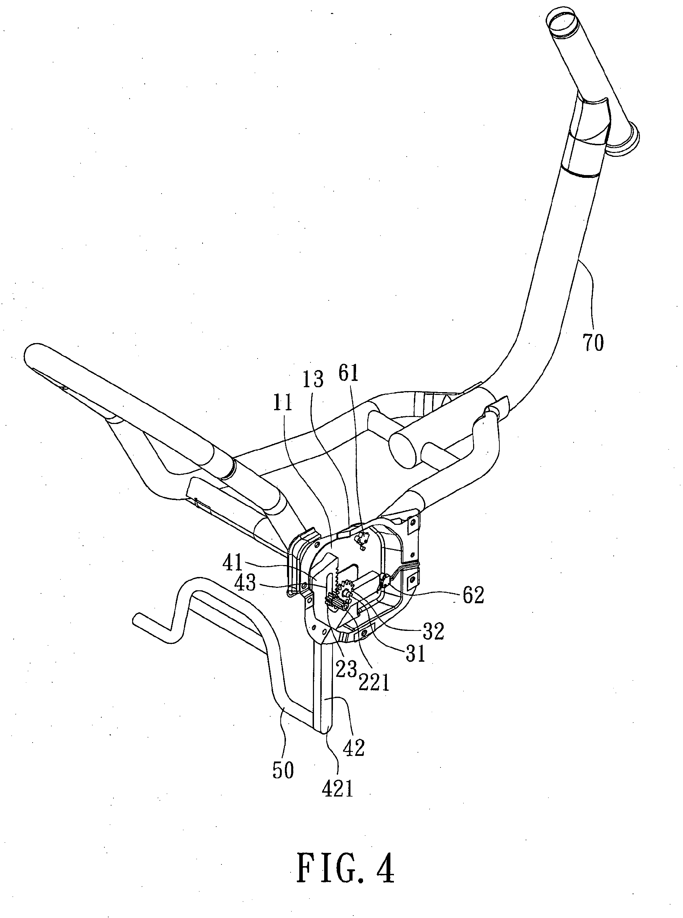

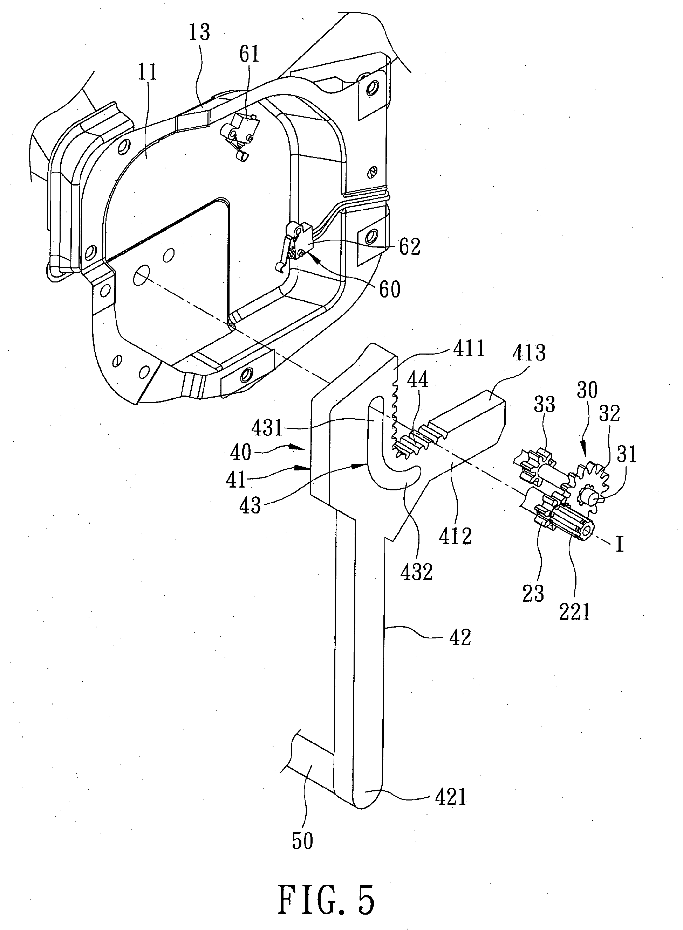

Referring to Figures 1, 2, 4 and 5, a preferred embodiment of the vehicle stand device of the present invention is adapted for attachment to a vehicle frame 70 of a vehicle. The preferred embodiment includes a housing 10, a driving unit 20, a transmission unit 30, a link 40, a foot stand 50, and a detector unit 60.

The housing 10 includes a first housing body 12 and a second housing body 13 that may be fastened to each other, and that cooperate to confine a receiving space 11.

The second housing body 13 is mounted on the vehicle frame 70.

The driving unit 20 includes a motor 21 connected electrically to a circuit board (not shown) of the vehicle and mounted on the first housing body 12, a speed reduction mechanism 22 driven rotatably by the motor 21 and having an output shaft 221, and a transmission member 23 driven rotatably by the output shaft 221 of the speed reduction mechanism 22 and disposed in the receiving space 11.

The output shaft 221 extends along an axis (I) through the first housing body 12 and into the receiving space 11.

The transmission unit 30 includes a rotary shaft 31 mounted rotatably on the second housing body 13 and extending parallel to the axis (I), a driven member 32 mounted on the rotary shaft 31 and driven rotatably by the transmission member 23, and a driving member 33 mounted on the rotary shaft 31 for rotation therewith.

When the driven member 32 is driven rotatably by the transmission member 23, the rotary shaft 31 rotates and drives rotation of the driving member 33 therewith.

The link 40 has a substantially L-shaped actuated portion 41 disposed in the receiving space 11, a connecting portion 42 extending from the actuated portion 41 and outwardly of the second housing body 13, a guide slot 43 formed in and substantially corresponding in shape to the actuated portion 41, and a plurality of teeth 44 formed on the actuated portion 41 and meshing with the driving member 33. The output shaft 221 of the speed reduction mechanism 22 extends through the guide slot 43, and is slidable therealong.

The actuated portion 41 of the link 40 has a first actuated section 411 and a second actuated section 412. The first actuated section 411 and the second actuated section 412 are formed with a curved edge 413 on which the teeth 44 are disposed.

The guide slot 43 of the link 40 has a straight slot section 431 formed in the first actuated section 411 and a curved slot section 432 formed in the second actuated section 412 and extending from one end of the straight slot section 431.

The foot stand 50 is substantially inverted-U shaped, and is attached to one end 421 of the connecting portion 42 opposite to the actuated portion 41.

The detector unit 60 includes a first sensor 61 mounted in the second housing body 13 and operatively associated with the first actuated section 411 of the actuated portion 41, and a second sensor 62 mounted in the second housing body 13 and operatively associated with the second actuated section 412 of the actuated portion 41.

In the preferred embodiment, the first and second sensors 61, 62 are exemplified using limit switches.

The first sensor 61 and the second sensor 62 are connected electrically to the circuit board, and generate signals for activating a foot stand lifted lamp or a vehicle stand lamp (not shown) by program design so as to notify the vehicle driver when the first actuated portion 411 and the second actuated portion 412 are detected respectively by the first sensor 61 and the second sensor 62.

Furthermore, a rotation path of the link 40 may be controlled by program design.

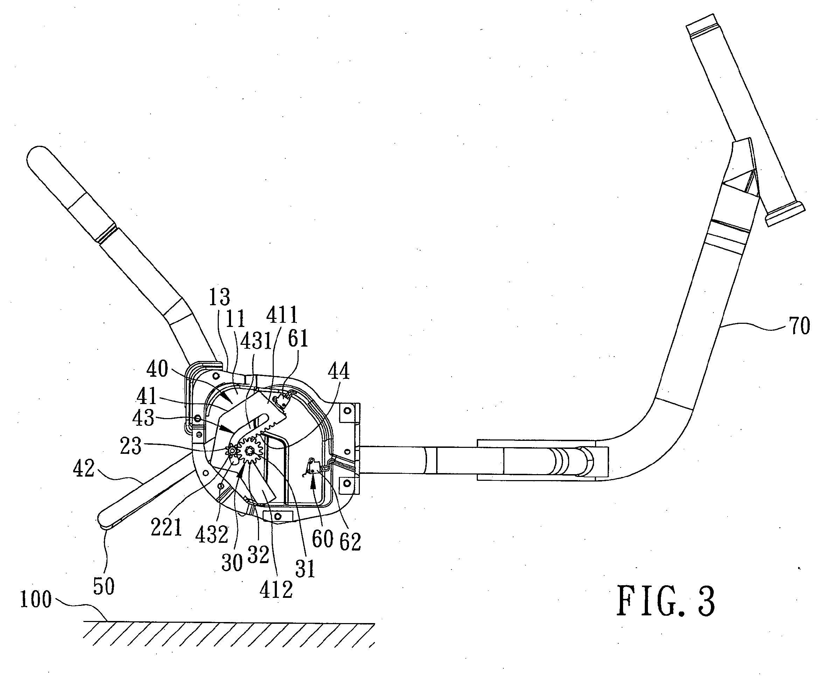

In use, referring to Figures 1 and 3, the first actuated section 411 is detected by the first sensor 61, and the output shaft 221 is disposed in the curved slot section 432 when the foot stand 50 is at a lifted position and away from the ground 100. Referring to Figures 1, 2, 4 and 5, to park the vehicle, a vehicle stand key (not shown) is operated for activating the motor 21 to drive rotation of the driven member 32 via the transmission member 23. The rotary shaft 31 and the driving member 33 are thus driven rotatably for driving the teeth 44 of the link 40. Subsequently, the link 40 actuates the foot stand 50 to rotate in a direction toward the ground 100. The link 40 may rotate smoothly due to the output shaft 221 of the speed reduction mechanism 22 that extends through the guide slot 43 and that is slidable therealong. The foot stand 50 rotates continuously until it touches the ground 100. The output shaft 221 is disposed in the straight slot section 431 at this time. The foot stand 50 may stand on the ground 100 smoothly and stably so as to achieve an effect of parking the vehicle due to engagement between the output shaft 221 and the straight slot section 431. At the same time, the second actuated section 412 is detected by the second sensor 62 so that the signal is generated to light the vehicle stand lamp of a vehicle panel so as to notify the vehicle driver that the foot stand 50 is at a standing position.

Referring to Figures 1, 3, 4 and 5, to lift the foot stand 50, a foot stand lift key (not shown) is operated for initiating reverse operation of the motor 21 to drive reverse rotation of the driven member 32 via the transmission member 23. The rotary shaft 31 and the driving member 33 are thus driven reversely and rotatably for driving the teeth 44 of the link 40. Subsequently, the link 40 actuates the foot stand 50 to rotate in a direction away from the ground 100. Meanwhile, the output shaft 221 moves into the curved slot section 432 of the guide slot 43 from the straight slot section 431 of the guide slot 43. The foot stand 50 may be lifted smoothly due to engagement between the output shaft 221 and the curved slot section 431. At the same time, the first actuated section 411 is detected by the first sensor 61 so that the signal is generated to light the foot stand lifted lamp of the vehicle panel so as to notify the vehicle driver that the foot stand 50 is at the lifted position.

In summary, the vehicle stand device of the present invention has the following benefits:
1. The present invention may park vehicles and lift foot stands of vehicles automatically with relative ease.
2. The present invention may park the vehicle and lift the foot stand 50 smoothly due to engagement of the output shaft 221 with the guide slot 43.
3. The transmission member 23, the transmission unit 30, and the link 40 are received in the receiving space 11 of the housing 10. Thus, the present invention may achieve effects of dustproof, reduced noise, extended durability, and safety.
4. The present invention may notify the vehicle driver that the foot stand 50 is at the standing position or the lifted position for driving safety via the detector unit 60 and the vehicle panel.

## Claims

1. A vehicle stand device comprising
a housing (10) that confines a receiving space (11) ;
a driving unit (20) mounted on the housing (10), the driving unit (20) including a motor (21), a speed reduction mechanism (22) driven rotatably by the motor (21) and having an output shaft (221), and a transmission member (23) driven rotatably by the output shaft (221) of the speed reduction mechanism (22) and disposed in the receiving space (11);
a transmission unit (30) including a rotary shaft (31) mounted rotatably on the housing (10), a driven member (32) mounted on the rotary shaft (31) and driven rotatably by the transmission member (23), and a driving member (33) mounted on the rotary shaft (31) for rotation therewith;
a link (40) having an actuated portion (41) disposed in the receiving space (11), a connecting portion (42) extending from the actuated portion (41) and outwardly of the receiving space (11), **characterized by** a guide slot (43) formed in the actuated portion (41), and a plurality of teeth (44) formed on the actuated portion (41) and meshing with the driving member (33), the output shaft (221) of the speed reduction mechanism (22) extending through the guide slot (43) and being slidable therealong; and
a foot stand (50) attached to the link (40) through the connecting portion (42).

2. The vehicle stand device as claimed in claim 1, **characterized in that** the actuated portion (41) of the link (40) is a substantially L-shaped body having a first actuated section (411) and a second actuated section (412), the first actuated section (411) and the second actuated section (412) being formed with a curved edge (413) on which the teeth (44) are disposed, the guide slot (43) of the link (40) having a straight slot section (431) formed in the first actuated section (411) and a curved slot section (432) formed in the second actuated section (412) and extending from one end of the straight slot section (431).

3. The vehicle stand device as claimed in claim 2, further **characterized by** a detector unit (60) including a first sensor (61) mounted in the housing (10) and operatively associated with the first actuated section (411) of the actuated portion (41), and a second sensor (62) mounted in the housing (10) and operatively associated with the second actuated section (412) of the actuated portion (41).

4. The vehicle stand device as claimed in claim 3, further **characterized in that** the foot stand (50) is movable with the link (40) between a lifted position and a standing position,
the first actuated section (411) being detected by the first sensor (61) and the output shaft (221) being disposed in the curved slot section (432) when the foot stand (50) is at the lifted position,
the second actuated section (412) being detected by the second sensor (62) and the output shaft (221) being disposed in the straight slot section (431) when the foot stand (50) is at the standing position.

## Patentansprüche

1. Eine Fahrzeugständervorrichtung, die folgende Merkmale aufweist:
ein Gehäuse (10), das einen Aufnahmeraum (11) abgrenzt;
eine Antriebseinheit (20), die an dem Gehäuse (10) befestigt ist, wobei die Antriebseinheit (20) einen Motor (21), einen Geschwindigkeitsreduktionsmechanismus (22), der durch den Motor (21) drehbar angetrieben wird und eine Ausgangswelle (221) aufweist, und ein Übertragungsbauteil (23) aufweist, das durch die Ausgangswelle (221) des Geschwindigkeitsreduktionsmechanismus (22) drehbar angetrieben wird und in dem Aufnahmeraum (11) angeordnet ist;
eine Übertragungseinheit (30) mit einer Drehwelle (31), die drehbar an dem Gehäuse (10) befestigt ist, einem angetriebenen Bauteil (32), das an der Drehwelle (31) befestigt ist und durch das Übertragungsbauteil (23) drehbar angetrieben wird, und einem Antriebsbauteil (33), das an der Drehwelle (31) zur Drehung mit derselben befestigt ist;
ein Verbindungsglied (40) mit einem betätigten Teil (41), der in dem Aufnahmeraum (11) angeordnet ist, einem Verbindungsteil (42), der sich von dem betätigten Teil (41) und außerhalb des Aufnahmeraums (11) erstreckt, **gekennzeichnet durch** einen Führungsschlitz (43) der in dem betätigten Teil (41) gebildet ist, und eine Mehrzahl von Zähnen (44), die an dem betätigten Abschnitt (41) gebildet sind und in das Antriebsbauteil (33) greifen, wobei sich die Ausgangswelle (221) des Geschwindigkeitsreduktionsmechanismus (22) **durch** den Führungsschlitz (43) erstreckt und entlang desselben gleitfähig ist; und
einen Fußständer (50), der **durch** den Verbindungsteil (42) an dem Verbindungsglied (40) angebracht ist.

2. Die Fahrzeugständervorrichtung gemäß Anspruch 1, die **dadurch gekennzeichnet ist, dass** der betätigte Teil (41) des Verbindungsglieds (40) ein im Wesentlichen L-förmiger Körper mit einem ersten betätigten Abschnitt (411) und einem zweiten betätigten Abschnitt (412) ist, wobei der erste betätigte Abschnitt (411) und der zweite betätigte Abschnitt (412) mit einem gekrümmten Rand (413) gebildet sind, an dem die Zähne (44) angeordnet sind, wobei der Führungsschlitz (43) des Verbindungsglieds (40) einen geraden Schlitzabschnitt (431), der in dem ersten betätigten Abschnitt (411) gebildet ist, und einen gekrümmten Schlitzabschnitt (432) aufweist, der in dem zweiten betätigten Abschnitt (412) gebildet ist und sich von einem Ende des geraden Schlitzabschnitts (431) erstreckt.

3. Die Fahrzeugständervorrichtung gemäß Anspruch 2, die ferner **gekennzeichnet ist durch** eine Detektoreinheit (60) mit einem ersten Sensor (61), der in dem Gehäuse (10) befestigt ist und dem ersten betätigten Abschnitt (411) des betätigten Teils (41) wirksam zugeordnet ist, und einem zweiten Sensor (62), der in dem Gehäuse (10) befestigt ist und dem zweiten betätigten Abschnitt (412) des betätigten Teils (411) wirksam zugeordnet ist.

4. Die Fahrzeugständervorrichtung gemäß Anspruch 3, die ferner **dadurch gekennzeichnet ist, dass** der Fußständer (50) mit dem Verbindungsglied (40) zwischen einer angehobenen Position und einer Stehposition bewegbar ist,
wobei der erste betätigte Abschnitt (411) durch den ersten Sensor (61) erfasst wird und die Ausgangswelle (221) in dem gekrümmten Schlitzabschnitt (432) angeordnet ist, wenn sich der Fußständer (50) in der angehobenen Position befindet,
wobei der zweite betätigte Abschnitt (412) durch den zweiten Sensor (62) erfasst wird und die Ausgangswelle (221) in dem geraden Schlitzabschnitt (431) angeordnet ist, wenn sich der Fußständer (50) in der Stehposition befindet.

## Revendications

1. Dispositif de support pour véhicule, comprenant
un boîtier (10) qui confine un espace de réception (11);
une unité d'entraînement (20) montée sur le boîtier (10), l'unité d'entraînement (20) comportant un moteur (21), un mécanisme de réduction de vitesse (22) entraîné en rotation par le moteur (21) et présentant un arbre de sortie (221) et un élément de transmission (23) entraîné en rotation par l'arbre de sortie (221) du mécanisme de réduction de vitesse (22) et disposé dans l'espace de réception (11);
une unité de transmission (30) comportant un arbre rotatif (31) monté de manière rotative sur le boîtier (10), un élément entraîné (32) monté sur l'arbre rotatif (31) et entraîné en rotation par l'élément de transmission (23), et un élément d'entraînement (33) monté sur l'arbre rotatif (31) de manière à tourner avec ce dernier;
un maillon (40) présentant une partie actionnée (41) disposée dans l'espace de réception (11), une partie de connexion (42) s'étendant à partir de la partie actionnée (41) et vers l'extérieur de l'espace de réception (11),
**caractérisé par**
une fente de guidage (43) formée dans la partie actionnée (41), et une pluralité de dents (44) formées sur la partie actionnée (41) et engrenant l'élément d'entraînement (33), l'arbre de sortie (221) du mécanisme de réduction de vitesse (22) s'étendant à travers la fente de guidage (43) et coulissant le long de cette dernière; et
une béquille (50) fixée au maillon (40) à travers la partie de connexion (42).

2. Dispositif de support pour véhicule selon la revendication 1, **caractérisé par le fait que** la partie actionnée (41) du maillon (40) est un corps sensiblement en forme de "L" présentant un premier segment actionné (411) et un deuxième segment actionné (412), le premier segment actionné (411) et le deuxième segment actionné (412) étant formés avec un bord courbe (413) sur lequel sont disposées les dents (44), la fente de guidage (43) du maillon (40) présentant un segment de fente droit (431) formé dans le premier segment actionné (411) et un segment de fente courbe (432) formé dans le deuxième segment actionné (412) et s'étendant à partir d'une extrémité du segment de fente droit (431).

3. Dispositif de support pour véhicule selon la revendication 2, **caractérisé par** ailleurs par une unité de détection (60) comportant un premier capteur (61) monté dans le boîtier (10) et associé en fonctionnement au premier segment t actionné (411) de la partie actionnée (41), et un deuxième capteur (62) monté dans le boîtier (10) et associé en fonctionnement au deuxième segment actionné (412) de la partie actionnée (41).

4. Dispositif de support pour véhicule selon la revendication 3, **caractérisé par** ailleurs par le fait que la béquille (50) est déplaçable avec le maillon (40) entre une position relevée et une position de pied,
le premier segment actionné (411) étant détecté par le premier capteur (61) et l'arbre de sortie (221) étant disposé dans le segment de fente courbe (432) lorsque la béquille (50) se trouve dans la position relevée,
le deuxième segment actionné (412) étant détecté par le deuxième capteur (62) et l'arbre de sortie (221) étant disposé dans le segment de fente droit (431) lorsque la béquille (50) se trouve la position de pied.
